# EUROPÄISCHE PATENTSCHRIFT

(11) **EP 0 912 845 B1**
(45) Veröffentlichungstag und Bekanntmachung des Hinweises auf die Patenterteilung: **17.05.2000**
(21) Anmeldenummer: 97934500.6
(22) Anmeldetag: 19.07.1997
(51) Int. Cl.: F16H 61/14

(54) **VERFAHREN ZUR ABSTIMMUNG DES SCHALTZUSTANDES EINER WANDLERÜBERBRÜCKUNGSKUPPLUNG BEI EINEM AUTOMATIKGETRIEBE**
PROCESS FOR TUNING THE SWITCHING STATE OF A TORQUE CONVERTER LOCK-UP CLUTCH IN AN AUTOMATIC GEAR BOX
PROCEDE POUR ADAPTER L'ETAT D'EMBRAYAGE D'UN EMBRAYAGE DE PONTAGE DU CONVERTISSEUR D'UNE BOITE AUTOMATIQUE DE VITESSES

(30) Priorität: 26.07.1996 DE 19630300
(43) Veröffentlichungstag der Anmeldung: 06.05.1999
(73) Patentinhaber: ZF FRIEDRICHSHAFEN Aktiengesellschaft, 88038 Friedrichshafen (DE)
(72) Erfinder: JAUCH, Friedemann, D-88074 Meckenbeuren (DE); ZELLER, Heinrich, D-88048 Friedrichshafen (DE)
(74) Vertreter: Zietlow, Karl-Peter
(86) Internationale Anmeldenummer: EP9703893
(87) Internationale Veröffentlichungsnummer: WO9804852

(56) Entgegenhaltungen:
- EP-A- 0 405 437
- US-A- 4 691 812
- US-A- 4 730 709
- US-A- 5 277 287

## Beschreibung

Die Erfindung betrifft ein Verfahren zur Abstimmung des Schaltzustandes einer Wandlerüberbrückungskupplung (WK) bei einem Automatgetriebe mit der Abtriebsdrehzahl der Getriebeausgangswelle oder den Raddrehzahlen von Antriebsrädern eines Fahrzeuges mittels eines elektronischen Getriebesteuergerätes (EGS) mit Berechnungseinheit und eines elektrischen Druckstellers (EDS).

Aus der Praxis sind für Kraftfahrzeuge mit Automatgetrieben Wandlerüberbrückungskupplungen bekannt, die im geöffneten oder aktivierten Zustand betrieben werden können. Aktivierter Zustand umfaßt hierbei den geregelt schlupfenden und geschlossenen Zustand.

Eine derartige Wandlerüberbrückungskupplung ist beispielsweise in der ATZ Automobiltechnische Zeitschrift 96 (1994) 11 seiten 690-697, "Geregelte Wandlerkupplung für den neuen 7er von BHW", beschrieben. Wichtigste Eingangsgröße für den Regler dieser bekannten Wandlerüberbrückungskupplung sind die Motordrehzahl und die Turbinendrehzahl. Durch Subtraktion dieser beiden Eingangsgrößen wird der Wandlerschlupf als Regelgröße berechnet. Die Führungsgröße WK-Sollschlupf ist in einem Kennfeld in einem elektronischen Getriebesteuergerät (EGS) abgelegt.

Als Stellglied für die Druckansteuerung dieser Wandlerüberbrückungskupplung dient ein elektrischer Drucksteller (EDS), der vom elektronischen Getriebesteuargerät (EGS) über eine stromgeregelte Endstufe angesteuert wird. Der EDS wandelt den vorgegebenen Steuerstrom entsprechend seiner Kennlinie in einen proportionalen Hydraulikdruck um. Durch diesen EDS-Druck werden z. B. bei einem 2-Leitungswandler mit zwei Steuerventilen sowohl der Wandlerdruck, der auf die Rückseite des Wandlerkupplungskolbens wirkt, als auch der Wandlerkupplungsdruck, der den Wandlerkupplungskolben schließt, gesteuert.

Die Wandlerüberbrückungskupplung wird als "offen" oder "geöffnet" bezeichnet, wenn kein Moment über die Wandlerüberbrückungskupplung übertragen wird.

Im "aktivierten" Zustand wird der Kolben der Wandlerüberbrückungskupplung mit Druck beaufschlagt. Über die resultierende Kolbenkraft wird eine oder mehrere Reiblamelle(n) angepreßt und ein entsprechendes Übertragungsmoment erzeugt.

Bei der sogenannten "Schnellöffnung" der Wandlerüberbrückungskupplung wird das durch die Wandlerüberbrückungskupplung übertragene Moment schnell auf geringe Werte (z. B. < 50 Nm) abgebaut oder die Wandlerüberbrückungskupplung vollständig geöffnet.

Neben den üblichen Steuerungsfunktionen weist diese Wandlerüberbrückungskupplung verschiedene Sonderfunktionen auf, um das Verhalten zu optimieren.

So ist bei dieser Wandlerüberbrückungskupplung ein Verfahren bekannt, nachdem die Wandlerüberbrückungskupplung unterhalb einer Grenztemperatur immer geöffnet wird und bei dem während des Warmlaufs der Sollschlupf im Vergleich zum Normalbetrieb angehoben wird.

Durch ein anderes Steuerungsverfahren wird der Betrieb der Wandlerüberbrückungskupplung bei sehr hohen Getriebetemperaturen unterbunden, um die Reibflächen vor Überhitzung zu schützen.

Des weiteren ist ein Verfahren zur Schnellfüllung bekannt, bei dem der Kolben der Wandlerüberbrückungskupplung beim Übergang vom offenen in den geregelten Zustand schnell in die Regelposition gefahren wird.

Durch ein weiteres Schaltverfahren bleibt der Betrieb der Wandlerüberbrückungskupplung auch während einer Schaltung erhalten, um ein Hochdrehen des Motors zu vermeiden, wobei der Sollschlupf während einer Schaltung angehoben wird. Aus der US 4 730 709 sind die Merkmale des Oberbegriffes des Anspruches 1 bekannt geworden.

Dennoch werden von den bekannten Wandlerüberbrückungskupplungen bzw. deren elektronischem Getriebesteuergerät bestimmte Fahrsituationen nicht richtig erkannt, und die Wandlerüberbrückungskupplung bleibt beispielsweise aktiviert, obwohl sie geöffnet werden müßte.

Eine derartige Fahrsituation ist das Durchdrehen der Antriebsräder eines Fahrzeuges auf einem glatten Untergrund während die Wandlerüberbrückungskupplung aktiviert ist und der anschließende Übergang auf einen Untergrund mit hohem Reibwert. Beim Durchdrehen der Antriebsräder wird bei den bekannten Wandlerüberbrückungskupplungen in einen nächst höheren Gang geschaltet. Wenn die Antriebsräder wieder auf rauhem Untergrund greifen, werden diese abrupt abgebremst, wobei jedoch von dem Automatgetriebe mit aktivierter Wandlerüberbrückungskupplung während des Durchdrehens der Antriebsräder ein zu hoher Gang geschaltet worden ist. Dies kann dazu führen, daß der Motor aufgrund des starren Durchtriebs zwischen dem Antrieb und den Rädern abgewürgt wird und eine sicherheitskritische Fahrsituation entsteht.

Es ist daher Aufgabe der vorliegenden Erfindung, ein Verfahren bereit zu stellen, durch welches der Zustand einer Wandlerüberbrückungskupplung bei einem Automatgetriebe auf das schnelle Abbremsen der Antriebsräder eines Fahrzeuges abgestimmt wird.

Diese Aufgabe wird durch die im kennzeichnenden Teil des Anspruchs 1 aufgeführten Verfahrensschritte gelöst.

Das erfindungsgemäße Verfahren bietet den Vorteil, daß durch die ständige Ermittlung des zeitbezogenen Drehzahl-Gradienten bei aktivierter Wandlerüberbrückungskupplung ein schnelles Abbremsen der Antriebsräder eines Fahrzeuges sofort erkannt und dadurch die oben genannte Schnellöffnung der Wandlerüberbrückungskupplung ausgelöst wird. Im schnellgeöffneten Zustand der Wandlerüberbrückungskupplung kann das ansonsten auftretende starke Verzögern oder gar Abwürgen des Motors verhindert werden.

Weitere Vorteile der Erfindung ergeben sich aus den Unteransprüchen und der nachfolgenden, auf die prinzipmäßige Zeichnung Bezug nehmenden Beschreibung der Erfindung.

Es zeigt:
- Fig. 1: ein Flußdiagramm eines Verfahrens zur Abstimmung des Schaltzustandes einer Wandlerüberbrückungskupplung mit der Abtriebsdrehzahl der Getriebeausgangswelle oder den Raddrehzahlen von Antriebsrädern eines Fahrzeuges,
- Fig. 2: ein Flußdiagramm eines weiteren Verfahrens zur Abstimmung des Schaltzustandes einer Wandlerüberbrückungskupplung mit der Abtriebsdrehzahl der Getriebeausgangswelle oder den Raddrehzahlen von Antriebsrädern eines Fahrzeuges, und
- Fig. 3: ein Diagramm mit dem Verlauf der Abtriebsdrehzahl n_ab und des Stromes der Wandlerüberbrückungskupplung (WK) über der Zeit bei einer Schnellöffnung der Wandlerüberbrückungskupplung gemäß dem Verfahren nach Fig. 1 oder 2.

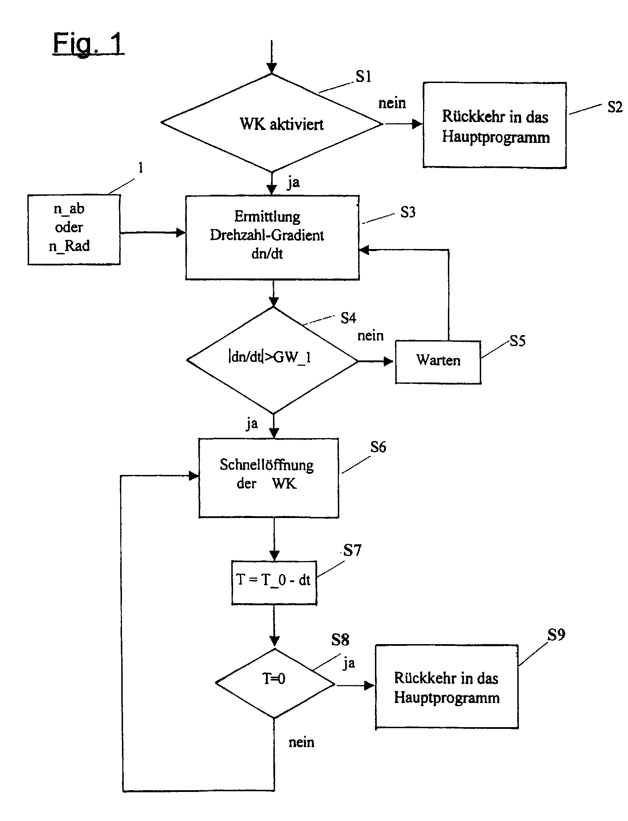

Bezug nehmend auf Fig. 1 ist ein Verfahrensablaufplan für ein Unterprogramm zur Abstimmung des Schaltzustandes einer Wandlerüberbrückungskupplung (WK) bei einem Automatikgetriebe mit der Abtriebsdrehzahl n_ab der Getriebeausgangswelle oder den Raddrehzahlen n_Rad der Antriebsräder eines Fahrzeuges dargestellt.

Die Abarbeitung dieses Unterprogramms kann durch höher priorisierte Tasks jederzeit unterbrochen werden. Sie wird dann an der gleichen Stelle fortgesetzt. Eine "Warteschleife" wird gleich behandelt.

Zu Beginn wird in einer ersten Unterscheidungsfunktion S1 geprüft, ob die Wandlerüberbrückungskupplung aktiviert ist. Falls dies nicht der Fall ist, verzweigt das Programm zur Rückkehr in ein Hauptprogramm zu einer Verarbeitungsfunktion S2. Ist die Wandlerüberbrückungskupplung jedoch aktiviert, wird von der Unterscheidungsfunktion Sl eine Verarbeitungsfunktion S3 aktiviert, welche einen zeitbezogenen Drehzahl-Gradienten (dn/dt) aus Drehzahlen ermittelt, welche von einer Meßeinrichtung 1 an die Verarbeitungsfunktion S3 ausgegeben werden. Die Drehzahlen können dabei die an - nicht dargestellten - Antriebsrädern eines Fahrzeuges gemessenen Raddrehzahlen n_Rad oder alternativ hierzu die Abtriebsdrehzahl n_ab der ebenfalls nicht dargestellten Getriebeausgangswelle sein. Der Drehzahl-Gradient (dn/dt) wird dabei gleitend gemittelt, d. h. er stellt einen Mittelwert aus einem aktuell errechneten Drehzahl-Gradienten und einem oder mehreren zuvor in sehr kurzen Abständen ermittelten Drehzahl-Gradienten dar. Der so ermittelte Drehzahl-Gradient, welcher als Differenzquotient gemäß der Funktion (n_ab(t2) - n_ab(t1))/(t2-t1) bei Heranziehung der Abtriebsdrehzahlen (n_ab) von der Berechnungseinheit des elektronischen Getriebesteuergerätes errechnet wird, stellt damit einen verläßlichen Wert dar.

Der Drehzahl-Gradient (dn/dt) wird von der Verarbeitungsfunktion S3 an eine nachfolgende Unterscheidungsfunktion S4 ausgegeben, in der geprüft wird, ob der Betrag des Drehzahl-Gradienten (dn/dt) größer als ein vorgegebener erster Grenzwert GW_1 ist.

Ist das Abfrageergebnis der Unterscheidungsfunktion S4 negativ, so verzweigt das Programm zu der Wartefunktion S5, und es wird so lange eine Warteschleife durchlaufen, bis die Unterscheidungsfunktion S4 einen Drehzahl-Gradienten (dn/dt) erkennt, der größer als der Grenzwert GW_1 ist.

Ist das Abfrageergebnis der Unterscheidungsfunktion S4 positiv, d. h. daß der Betrag des Drehzahl-Gradienten (dn/dt) größer als der Grenzwert GW_1 ist, wird eine nachfolgende Verarbeitungsfunktion S6 zur Schnellöffnung der Wandlerüberbrückungskupplung gestartet. Beim Starten der Verarbeitungsfunktion S6 zur Schnellöffnung der Wandlerüberbrückungskupplung wird von dem elektronischen Getriebesteuergerät (EGS) der elektrische Drucksteller (EDS) derart angesteuert, daß der Strom zur Ansteuerung der Wandlerüberbrückungskupplung sprungförmig oder in einer kurzen Zeit (t = 1 sec) auf solche Werte gesetzt oder geführt wird, bei denen das in der Wandlerüberbrückungskupplung durch Reibung übertragene Moment gering ist, d. h. in einem Bereich von 0 bis 50 Nm liegt. Selbstverständlich ist es auch möglich, den Stromwert so zu wählen, daß die Wandlerkupplung vollständig geöffnet ist.

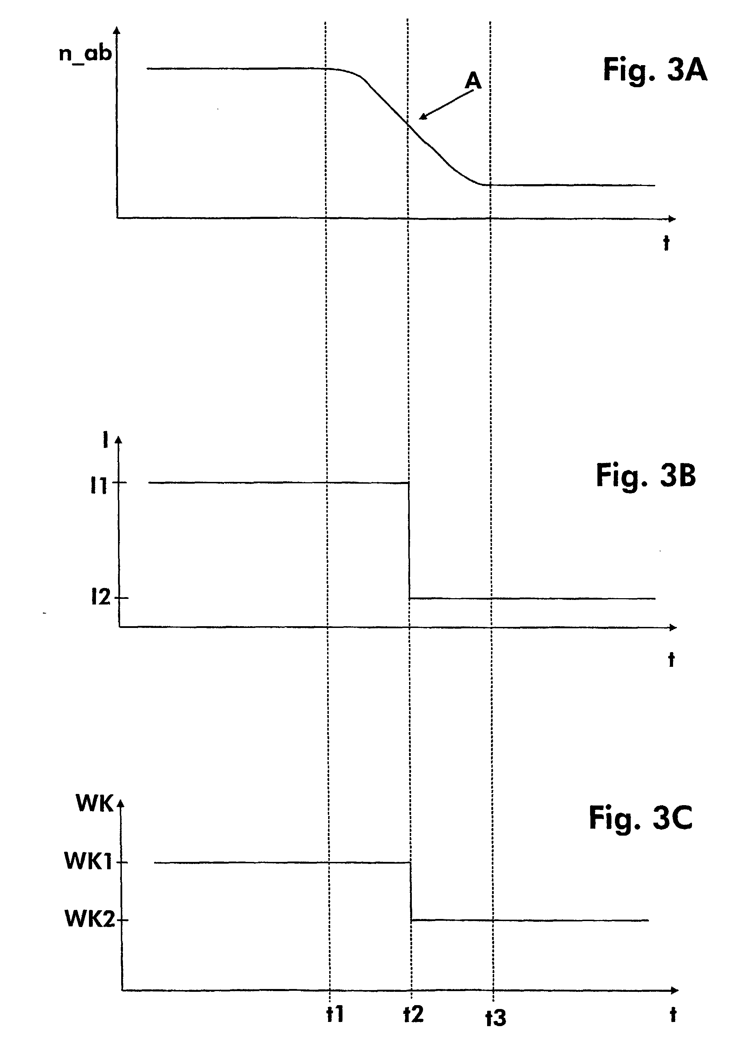

Fig. 3 besteht aus den Teilfiguren 3A bis 3C. Fig. 3A zeigt den Verlauf der Abtriebsdrehzahl n_ab über der Zeit, Fig. 3B den vom elektronischen Getriebesteuergerät ausgegebenen Stromwert und Fig. 3C den Zustand der Wandlerüberbrückungskupplung über der Zeit.
Im Zeitraum bis tl wird davon ausgegangen, daß die Antriebsräder des Fahrzeugs auf glattem Untergrund durchdrehen, so daß die Abtriebsdrehzahl sich auf einem hohen Niveau befindet. Des weiteren wird davon ausgegangen, daß die Wandlerüberbrückungskupplung sich im aktivierten Zustand befindet. Aktivierter Zustand bedeutet, daß diese entweder geregelt schlupfend oder geschlossen ist. In Fig. 3C ist dieser Zustand auf der Ordinate mit WK1 bezeichnet. Der entsprechende Stromwert ist in Fig. 3B mit I1 bezeichnet. Zum Zeitpunkt t1 kommen die Antriebsräder auf haftenden Untergrund, dadurch beginnt sich die Abtriebsdrehzahl in Richtung kleinere Werte zu ändern, d. h. die Antriebsräder werden abgebremst. Zum Zeitpunkt t2 ist der Betrag des Drehzahl-Gradienten der Abtriebsdrehzahl größer als der Grenzwert 1, Punkt A. Mit Auftreten des Drehzahl-Gradienten wird der Stromwert vom ersten Niveau I1 auf ein zweites Niveau I2 verringert, Fig. 3B. Dadurch ändert sich der Zustand der Wandlerüberbrückungskupplung derart, daß diese vom aktivierten Zustand WK1 auf den zweiten Zustand WK2 übergeht. Der Zustand WK2 kann so gewählt werden, daß die Wandlerüberbrückungskupplung nur noch ein geringes Moment überträgt, z. B. < 50 Nm. Selbstverständlich ist es auch möglich, die Wandlerüberbrückungskupplung vollständig zu öffnen. Am Punkt A, gemäß Fig. 3A, wird somit die Schnellöffnung der Wandlerüberbrückungskupplung ausgelöst. Im Zeitraum t2 bis t3 werden die Antriebsräder weiter abgebremst. Zum Zeitpunkt t3 wird davon ausgegangen, daß die Antriebsräder wieder haften.

Dieser schnell geöffnete Zustand der Wandlerüberbrükkungskupplung wird so lange beibehalten, bis ein vorgebbares Abbruchkriterium erfüllt ist. Hierzu wird in einer nachgeordneten Unterscheidungsfunktion S8 geprüft, ob das vorgegebene Abbruchkriterium erfüllt ist. Ist dies der Fall, so erfolgt eine Verzweigung zu einer Verarbeitungsfunktion S9 zur Rückkehr in das Hauptprogramm, wobei die Wandlerüberbrückungskupplung wieder aktiviert wird, d. h. geschlossen, bzw. in den geregelten Zustand geschaltet wird, falls dies durch das Hauptprogramm so vorgegeben ist.

Ist das Abbruchkriterium nicht erfüllt, so wird in die Verarbeitungsfunktion S6 zur Schnellöffnung der Wandlerüberbrückungskupplung zurückgekehrt und der schnell geöffnete Zustand der Wandlerüberbrückungskupplung wird aufrechterhalten.

Insbesondere, Bezug nehmend auf Fig. 1, stellt das Abbruchkriterium den Ablauf einer vordefinierten Zeit (T) dar, welche in einer der Verarbeitungsfunktion S6 zur Schnellöffnung der nachgeordneten Verarbeitungsfunktion S7 der Wandlerüberbrückungskupplung gestartet wird. Bei der vordefinierten Zeit T handelt es sich um eine Zeitstufe, welche derart gebildet wird, daß von einem Anfangswert T_0 ein Zeitbetrag dt einer laufenden Zeit t abgezogen wird. Mathematisch betrachtet stellt die vordefinierte Zeit T somit eine Differenz eines Anfangswertes T_0 minus des Zeitbetrages dt dar.

Bei dem Ausführungbeispiel gemäß Fig. 1 wird nun als Abbruchkriterium in der Unterscheidungsfunktion S8 geprüft, ob die vordefinierte Zeit T nun gleich dem Wert 0 ist, da die Unterscheidungsfunktion S8 dadurch erkennt, daß die Zeit T abgelaufen ist, d. h. daß die Zeitstufe den Endwert von Null erreicht hat. Wenn die Zeit T abgelaufen ist, bedeutet dies, daß zur Rückkehr in das Hauptprogramm in die Verarbeitungsfunktion S9 verzweigt wird, falls die Zeit T jedoch noch nicht abgelaufen ist, wird in die Verarbeitungsfunktion S6 zurückgekehrt und die Wandlerüberbrükkungskupplung bleibt schnellgeöffnet.

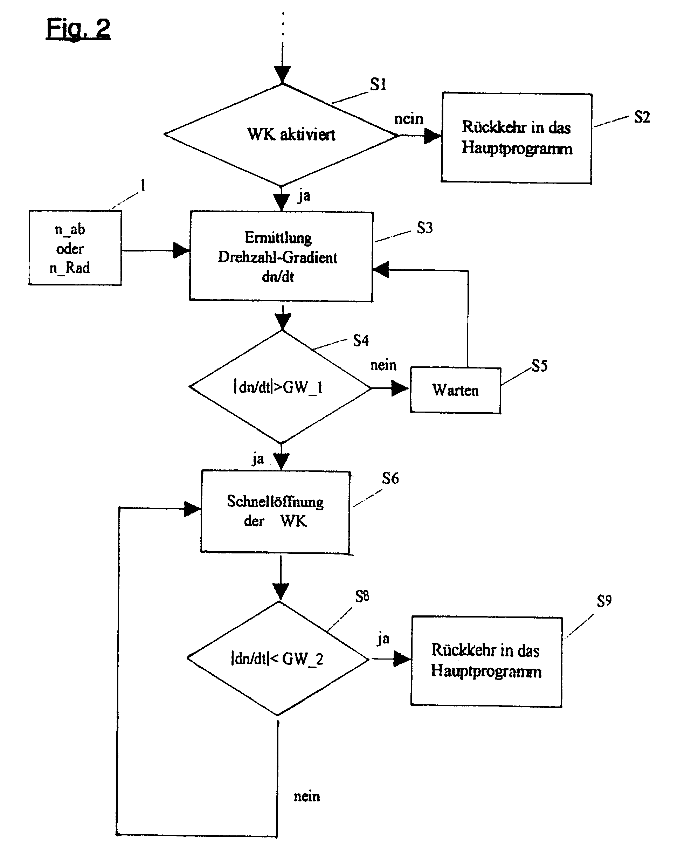

In dem in Fig. 2 dargestellten Ausführungsbeispiel ist das Abbruchkriterium so definiert, daß die Unterscheidungsfunktion S8 das Abbruchkriterium als erfüllt erkennt, wenn der Betrag des Drehzahl-Gradienten (dn/dt) kleiner als ein zweiter vordefinierter Grenzwert GW_2 ist. Ist der Betrag des Drehzahl-Gradienten größer als der Grenzwert GW_2, so bleibt durch eine Rückkehr in die Verarbeitungsfunktion S6 die Wandlerüberbrückungskupplung in einem schnellgeöffneten Zustand. Liefert die Unterscheidungsfunktion S8 dagegen das Ergebnis, daß der Betrag des Drehzahl-Gradienten (dn/dt) kleiner als der zweite Grenzwert GW_2 ist, so wird die Verarbeitungsfunktion S9 zur Rückkehr ins Hauptprogramm gestartet.

### Bezugszeichen

- 1: Meßeinrichtung

- S1: Unterscheidungsfunktion
- S2: Verarbeitungsfunktion
- S3: Verarbeitungsfunktion
- S4: Unterscheidungsfunktion
- S5: Wartefunktion
- S6: Verarbeitungsfunktion
- S7: Unterscheidungsfunktion
- S8: Verarbeitungsfunktion
- S9: Verarbeitungsfunktion

## Patentansprüche

1. Verfahren zur Steuerung einer Wandlerüberbrückungskupplung (WK) eines Automatgetriebes, bei dem ein elektronisches Getriebesteuergerät aus einer Abtriebsdrehzahl des Automatgetriebes (n_ab) deren Gradient ermittelt (dn/dt) und hieraus eine signifikante Verzögerung erkennt, wenn der Betrag des Gradienten (|dn/dt|) einen ersten Grenzwert übersteigt (|dn/dt| > GW_1), dadurch **gekennzeichnet,** daß mit Erkennen der signifikanten Verzögerung eine Funktion "schnell Öffnen" (S6) der Wandlerüberbrückungskupplung (WK) aktiviert wird und die Funktion "schnell Öffnen" bewirkt, daß die im geregelt schlupfenden Zustand befindliche Wandlerüberbrückungskupplung (WK) auf ein geringeres übertragbares Moment geführt wird.

2. Verfahren nach Anspruch 1, dadurch **gekennzeichnet,** daß die Funktion "schnell Öffnen" (S6) deaktiviert wird, wenn ein Abbruchkriterium (S8) erkannt wird, wobei das Abbruchkriterium (S8) dann vorliegt, wenn die signifikante Verzögerung einen zweiten Grenzwert (GW_2) unterschreitet (dn/dt < GW_2).

3. Verfahren nach Anspruch 2, dadurch **gekennzeichnet,** daß der Drehzahl-Gradient von dem elektronischen Getriebesteuergerät gemäß der Funktion (n(t2) - n(t1))/(t2 - t1) ermittelt wird.

4. Verfahren nach Anspruch 2, dadurch **gekennzeichnet,** daß der Drehzahl-Gradient (dn/dt) einen Mittelwert aus einem aktuellen Drehzahl-Gradienten und wenigstens dem zuletzt ermittelten Drehzahl-Gradienten darstellt.

## Claims

1. Method of controlling a converter bridging clutch (WK) of an automatic transmission, whereby an electronic transmission controller from an output speed of the automatic transmission (n_ab) determines its gradient (dn/dt) and from the latter recognizes a significant deceleration when the amount of the gradient (|dn/dt|) exceeds a first limit value (|dn/dt| > GW_1), characterized in that upon recognition of the significant deceleration an "open fast" function (S6) of the converter bridging clutch (WK) is activated and the effect of the "open fast" function is that the converter bridging clutch (WK), which is situated in the controlled slipping state, is switched to a lower transmissible torque.

2. Method according to claim 2, characterized in that the "open fast" function (S6) is deactivated when an abort criterion (S8) is recognized, wherein the abort criterion (S8) is present when the significant deceleration falls below a second limit value (GW_2) (dn/dt < GW_2).

3. Method according to claim 2, characterized in that the speed gradient is determined by the electronic transmission controller in accordance with the function (n(t2) - n(t1))/(t2 - t1).

4. Method according to claim 2, characterized in that the speed gradient (dn/dt) is a mean value from an actual speed gradient and at least the last determined speed gradient.

## Revendications

1. Procédé pour commander un embrayage de blocage du convertisseur (WK) d'une boîte de vitesses automatique, dans lequel, à partir d'une vitesse de rotation de sortie de la boîte de vitesses automatique (n_ab), un appareil de commande électronique de la boîte de vitesses calcule le gradient de cette vitesse (dn/dt) et, sur cette base, reconnaît une décélération significative lorsque la valeur du gradient (|dn/dt|) excède une première valeur limite (|dn/dt| > GW_1), **caractérisé** en ce que, en réponse à la reconnaissance de la décélération significative, une fonction "ouverture rapide" (S6) de l'embrayage de blocage du convertisseur (WK) est activée et la fonction "ouverture rapide" a pour effet que l'embrayage de blocage du convertisseur (WK), qui se trouve à l'état de glissement asservi, est amené à un couple transmissible plus faible.

2. Procédé selon la revendication 1, **caractérisé** en ce que la fonction "ouverture rapide" (S6) est désactivée lorsqu'un critère d'interruption (S8) est reconnu, le critère d'interruption (S8) étant présent lorsque la décélération significative passe au-dessous d'une deuxième valeur limite (GW_2) (dn/dt < GW_2).

3. Procédé selon la revendication 2, **caractérisé** en ce que le gradient de la vitesse de rotation est calculé par l'appareil de commande électronique de la boîte de vitesses en appliquant la fonction (n(t2) - n(t1)) / (t2-t1).

4. Procédé selon la revendication 2, **caractérisé** en ce que le gradient de la vitesse de rotation (dn/dt) représente une valeur moyenne d'un gradient de vitesse de rotation actuel et d'au moins le gradient de vitesse de rotation calculé en dernier lieu.
